**Europäisches Patentamt**

**European Patent Office**

**Office européen des brevets**

(19)

(11) Veröffentlichungsnummer : **0 183 082 B1**

(12) **EUROPÄISCHE PATENTSCHRIFT**

(45) Veröffentlichungstag der Patentschrift :
10.02.88

(51) Int. Cl.⁴ : **A 47 J 37/07, F 24 B 7/02**

(21) Anmeldenummer : 85113910.5

(22) Anmeldetag : 31.10.85

(54) **Grilltisch.**

(30) Priorität : 24.11.84 DE 3442971

(43) Veröffentlichungstag der Anmeldung :
04.06.86 Patentblatt 86/23

(45) Bekanntmachung des Hinweises auf die Patenterteilung : 10.02.88 Patentblatt 88/06

(84) Benannte Vertragsstaaten :
**AT BE CH DE FR GB IT LI LU NL SE**

(56) Entgegenhaltungen :
**DE-U- 7 404 217**
**DE-U- 7 702 274**
**FR-A- 726 200**
**FR-A- 1 003 548**
**FR-A- 1 570 591**
**FR-A- 2 288 504**
**US-A- 2 058 254**
**US-A- 2 742 892**
**US-A- 3 327 697**
**US-A- 4 481 408**

(73) Patentinhaber : **Marzari, Siegfried**
**Willerazhofener Strasse 43**
**D-7970 Leutkirch 1 - Heggelbach (DE)**

(72) Erfinder : **Marzari, Siegfried**
**Willerazhofener Strasse 43**
**D-7970 Leutkirch 1 - Heggelbach (DE)**

(74) Vertreter : **Patentanwälte Dipl.-Ing. E. Eisele Dr.-Ing.**
**H. Otten**
**Seestrasse 42**
**D-7980 Ravensburg (DE)**

**Beschreibung**

Die Erfindung betrifft einen Grilltisch mit auf einem zentralen Hohlfuß abgestützter Tischplatte, die eine zentrale Öffnung aufweist, in die ein Feuerungsbehälter eingesetzt ist, oberhalb dessen sich der Grillrost befindet, wobei zwischen der Tischplatte und dem Hohlfuß Lufteintrittsöffnungen vorgesehen sind, die den Ringraum zwischen Hohlfuß und Feuerungsbehälter mit dem Außenluftbereich unterhalb der Tischplatte verbinden.

Ein Grilltisch dieser Gattung ist aus dem DE-U-77 02 274 bekannt. Hierbei dienen die Lufteintrittsöffnungen dazu, die unterhalb der Tischplatte befindliche Luft durch einen gelochten Behälterboden in den Feuerungsbehälter als Brennluft einzuführen. Eine Steuerung dieser Luftmenge ist nicht möglich.

Der Erfindung liegt die Aufgabe zugrunde, den bekannten Grilltisch dahingehend auszubilden, daß die Luftströmung im Grilltischbereich unabhängig vom Brennprozeß im Feuerungsbehälter beeinflußt und insbesondere als Warmluftheizung in der unmittelbaren Grilltischumgebung verwendet werden kann.

Diese Aufgabe wird erfindungsgemäß dadurch gelöst, daß der Feuerungsbehälter nach unten und auf den Seiten, die den ringförmigen Spalt mitbegrenzen, geschlossen ist, daß im Hohlfuß ein Gebläse angeordnet ist und daß sich im Bodenbereich des Hohlfußes an diesen eine Luftauslaßeinrichtung anschließt.

Diese Maßnahme hat den Vorteil, daß einerseits die durch Wärmeleitung erwärmte Tischplatte mittels der angesaugten Luft gekühlt und auf einer bestimmten Temperatur gehalten werden kann, während andererseits diese Luft zwangsweise am Feuerungsbehälter entlang streicht und schließlich als Warmluftschleier oder Raumheizung für die um den Grilltisch herumsitzenden Personen in kühleren Jahreszeiten genutzt werden kann. Die Brennluft für die im Feuerungsbehälter enthaltenen Grillkohlen tritt von oben zu, während die heißen Brenngase senkrecht aufsteigen.

Was die Ausgestaltung der Luftauslaßeinrichtung im einzelnen angeht, wird vorgeschlagen, daß der Hohlfuß in der Nähe seines unteren Randes einen Umfangslochkranz aufweist, der von einem einen identischen Lochkranz aufweisenden Drehring abgedeckt ist. Wenn der Drehring so steht, daß die Löcher aufeinanderliegen und somit geöffnet sind, bildet die in den Fußraum austretende Warmluft einen angenehmen aufsteigenden Schleier bzw. sie erwärmt den Raum, in dem sich der Grilltisch und die darumsitzenden Personen befinden.

Es kann aber auch unter dem den Hohlfuß tragenden Boden eine Anzahl radial zur Vertikalachse des Hohlfußes verlaufender, vom Innenraum des Hohlfußes ausgehender Luftströmungskanäle gebildet sein, die mittels eines Drehschiebers absperrbar sind. Ist der Drehschieber geöffnet, so kann in der wärmeren Jahreszeit die Warmluft durch die Luftströmungskanäle so weit vom Grilltisch weggeführt werden, daß sie nicht mehr als lästig empfunden wird. Wenn also beispielsweise ein Pavillon um den Grilltisch herumgebaut ist, kann die Luft aus diesem hinaus geführt werden. Es ist aber auch möglich, die Austrittsöffnungen der Luftströmungskanäle knapp hinter den um den Grilltisch herumsitzenden Personen enden zu lassen bzw. innerhalb der Außenwände des erwähnten Pavillons, wodurch eine Raumheizung im Rückenbereich erzielt wird.

Vorzugsweise sind der Drehring und der Drehschieber durch ein gemeinsames Betätigungsorgan derart miteinander gekuppelt, daß in der einen Endstellung des Betätigungsorgans die Löcher des geöffneten Lochkranzes und die Luftströmungskanäle gesperrt sind, während in der anderen Endstellung die Löcher geschlossen und die Luftströmungskanäle geöffnet sind. Mit der Zwischenstellung des Betätigungsorgans läßt sich je nach Jahreszeit und Wohlbefinden der Gesamtluftstrom mengenmäßig beliebig aufteilen.

Zur Erhöhung der Heizleistung des beschriebenen Grilltisches wird vorgeschlagen, daß der Feuerungsbehälter von einer Anzahl strahlenförmig angeordneter Luftheizrohre durchsetzt ist, die sich zwischen einer zentralen Einformung des Behälterbodens und der Behälterseitenwand erstrecken. Zweckmäßigerweise werden die Rohre in entsprechende Öffnungen des Feuerungsbehälters eingeschweißt, wobei ihre Enden offen und mit der Behälteraußenfläche bündig sind. Die zwangsgeförderte Luft streicht somit nicht nur an der Außenfläche des Feuerungsbehälters entlang, sondern strömt auch durch die von der Glut umgebenen Luftheizrohre, so daß sie sich sehr viel intensiver erwärmt. Dadurch wird beispielsweise die wirksame Beheizung eines den Grilltisch umgebenden Pavillons auch bei verhältnismäßig tiefen Außentemperaturen ermöglicht.

Nach dem Anheizen der Glut ist es erwünscht, den Grilltisch schnell zu erwärmen. Dies wird vorteilhafterweise dadurch erreicht, daß die Drehrichtung des Gebläserotors umkehrbar ist. Das koaxial in den Hohlfuß eingebaute Gebläse fördert also in diesem besonderen Fall nicht nach unten, sondern saugt von unten an und fördert nach oben, so daß die Wärme der jungen Glut in den Luftheizrohren aufgenommen wird und an den Lufteintrittsöffnungen heiße Luft austritt, welche die Tischplatte von unten erwärmt. Erfahrungsgemäß reicht es aus, das Gebläse nur 30 Sekunden mit umgekehrter Drehrichtung zu betreiben, um dem Grilltisch, in dem sich Eßmulden befinden können, die gewünschte Temperatur zu geben.

Ein Ausführungsbeispiel der Erfindung wird nachfolgend anhand der Zeichnung erläutert. Im einzelnen zeigt

Fig. 1 einen Vertikalschnitt eines Grilltisches,

Fig. 2 die Draufsicht II-II des Grilltisches nach Fig. 1 und

Fig. 3 einen Horizontalschnitt III-III.

Der dargestellte Grilltisch hat eine kreisrunde Tischplatte 1, die mittig über mehrere Abstandshalter 2 von einem zylindrischen Hohlfuß 3 abgestützt ist. Infolge der Abstandshalter 2 befindet sich der obere Rand des Hohlfußes 3 unterhalb der Tischplatte 1, wodurch sich schlitzförmige Lufteintrittsöffnungen 4 ergeben.

Die Tischplatte 1 hat eine runde Mittenöffnung, deren Durchmesser nahezu gleich der Innenweite des Hohlfußes 3 ist. In diese Tischplattenöffnung ist ein zylindrischer Feuerungsbehälter 5 eingehängt. Er hat oben einen Flansch, der auf der Tischplatte 1 aufliegt. Der Boden des Feuerungsbehälters 5 hat eine kegelstumpfförmige, nach oben stehende Einformung 6. Zwischen dem Mantel dieser Einformung 6 und dem Mantel des Feuerungsbehälters 5 erstrecken sich zehn sternförmig angeordnete Luftheizrohre 7, die von innen nach außen ansteigen. Die offenen Enden der Luftheizrohre 7 sind in entsprechende Öffnungen der Mantelflächen eingeschweißt und nahezu bündig mit diesen. In den Feuerungsbehälter 5 werden Grillkohlen etwa bis in halber Höhe eingefüllt und entzündet. Zwischen dem Mantel des Feuerungsbehälters 5 und dem Hohlfuß 3 besteht ein ringförmiger Spalt 8.

Unterhalb des Feuerungsbehälters ist in dem Hohlfuß 3 mittels eines Zwischenringes 9 ein Ventilator 10 eingebaut. Seine Achse verläuft vertikal und er ist von einem Leitrohr 11 umgeben. Der Antriebsmotor ist für Rechts- und Linkslauf vorgesehen.

In der Nähe seines unteren Endes hat der Hohlfuß 3 über seinen ganzen Umfang regelmäßig verteilte Luftauslaßöffnungen 12. Dieser Lochkranz ist außen von einem Drehring 13 umgeben, der entsprechende Öffnungen aufweist. Durch Verdrehen dieses Drehrings 13 können somit die Luftauslaßöffnungen 12 stufenlos geschlossen und geöffnet werden.

Wird der Grilltisch im Freien, beispielsweise auf einer Terrasse, aufgestellt, so erfüllt die bisher beschriebene Luftauslaßeinrichtung an sich schon den Bedarf. Es können jedoch zusätzliche Luftströmungskanäle vorgesehen sein, die im folgenden beschrieben werden.

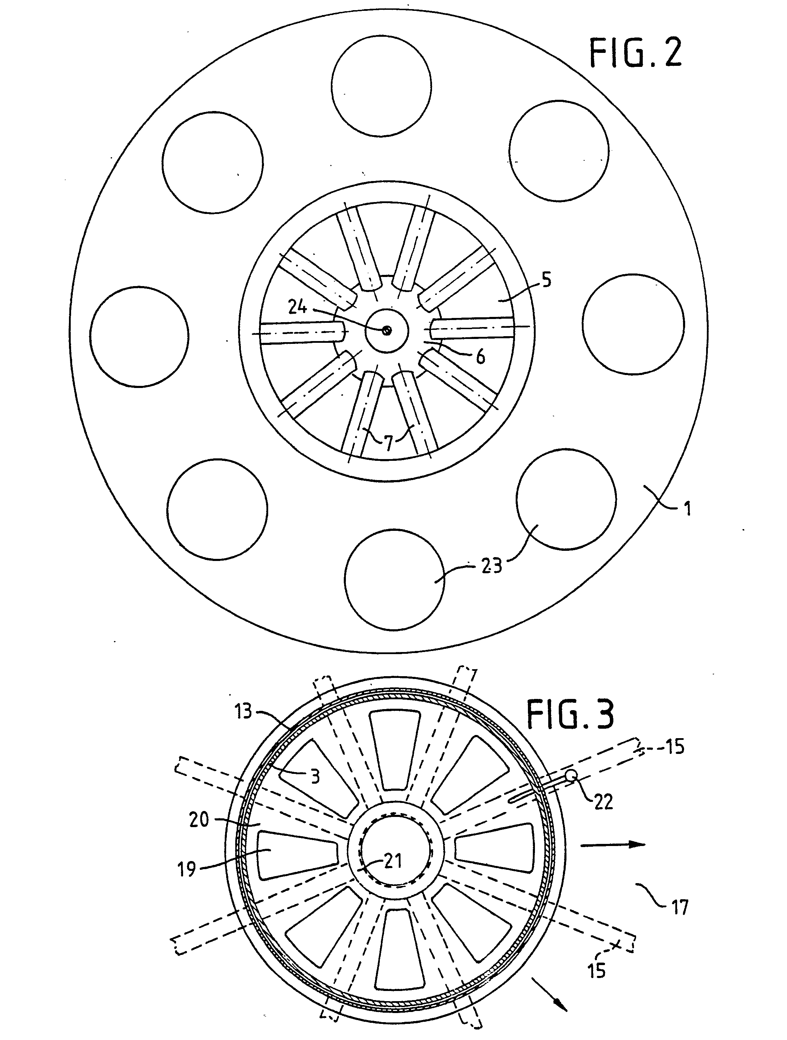

Der gezeigte Grilltisch bzw. sein Hohlfuß 3 steht mit seinem unteren Flansch auf einem plattenförmigen Bodenbelag 14 auf. Dieser ist unterstützt von sternförmig angeordneten Trägern 15, insbesondere Profilrohren, die von einem zentral unter dem Hohlfuß 3 angeordneten Nabenring 16 ausgehen, an dem sie befestigt sind. Zwischen den Trägern 15 ergeben sich sektorförmige Luftströmungskanäle 17 (Fig. 3). Mittels eines Drehschiebers läßt sich die Luftströmung vom Inneren des Hohlfußes 3 in die Kanäle 17 ebenfalls stufenlos einstellen.

Der Drehschieber besteht aus einer Festplatte 18, welche die ringförmige Durchlaßöffnung zwischen dem Nabenring 16 und dem Rand der Öffnung des Bodenbelages 14 abdeckt. Diese Festplatte 18 hat acht regelmäßig sternförmig angeordnete trapezförmige Fenster 19. Über der Festplatte 18 befindet sich eine Drehplatte 20 gleicher Gestalt, die mittels einer Buchse 21 in dem Nabenring 16 gelagert ist. Mittels eines Griffstücks 22, welches durch einen horizontalen Schlitz des Hohlfußes 3 greift, sind die Drehplatte 20 und der Drehring 13 miteinander verbunden und können gemeinsam zwischen zwei Endstellungen hin und her gedreht werden. Die Anordnung ist vorzugsweise so getroffen, daß in der einen Endstellung der Drehschieber geschlossen und somit die Luftzufuhr zu den Luftströmungskanälen 17 gesperrt ist, während die Luftauslaßöffnungen 12 frei sind. In der anderen Endstellung ist der Drehschieber geöffnet und die Luftauslaßöffnungen 12 sind geschlossen. In den Zwischenstellungen können die Luftströmungen beliebig verteilt werden. Die Luftströmungskanäle 17 können radial so weit vom Grilltisch wegführen, daß die um den Tisch sitzenden Personen von der austretenden Warmluft nicht mehr behelligt werden (Sommerbetrieb). Ist der Grilltisch jedoch von einem kleinen Aufenthaltsraum umbaut, so können die Luftströmungskanäle 17 wahlweise im Rückenbereich der Personen, aber innerhalb des Gebäudes durch den Bodenbelag 14 wieder nach oben geführt werden.

Die kupferne Tischplatte 1 hat acht muldenartige Vertiefungen 23, die vorzugsweise in gleichen Umfangsabständen angeordnet sind. Diese muldenartigen Vertiefungen sind entweder mit einer Zinnauflage versehen, so daß sie unmittelbar als Eßmulden verwendet werden können, oder es sind in diese Vertiefungen passende Metallteller vorgesehen.

Am oberen Ende der Einformung 6 des Feuerungsbehälters ist ein vertikal stehender Tragstab 24 befestigt. An ihm ist eine Schiebehülse 25 verschiebbar geführt, welche an ihrem unteren Ende einen runden Grillrost 26 trägt. Der Außendurchmesser dieses Grillrosts ist etwas kleiner als der Innendurchmesser des Feuerungsbehälters 5. Oberhalb des Grillrosts ist eine Aufnahmeschale 27 an der Schiebehülse 25 befestigt. Sie dient zur Vorratshaltung für das zu grillende Gut. Am oberen Ende der Schiebehülse 25 ist eine Arretiervorrichtung 28 vorgesehen, die einen Rastbolzen enthält. Dieser greift in eine von einer größeren Anzahl von Umfangsrillen des Tragstabes 24 ein, die in verschiedenen Höhen angeordnet sind. Dadurch läßt sich die Höhe des Grillrosts 26 je nach der augenblicklichen Hitze der Glut beliebig einstellen, wobei jedoch der Grillrost und die Aufnahmeschale drehbar bleiben.

Der beschriebene Grilltisch wirkt wie folgt: Wenn sich nach dem Entzünden der Grillkohlen der Feuerungsbehälter 5 langsam erwärmt, die Tischplatte 1 jedoch noch kalt ist, kann man durch eine kurzzeitige Inbetriebnahme des Ventilators 10 mit Förderrichtung nach oben (entgegen den dargestellten Pfeilen) die Tischplatte schnell erwärmen. Die Luft wird dabei durch die Luftauslaßöffnungen 12 angesaugt und durch die Luftheizrohre bzw. den Spalt 8 gedrängt, so daß heiße Luft an den Lufteintrittsöffnungen 4 austritt und an der Unterseite der Tischplatte entlangströmt.

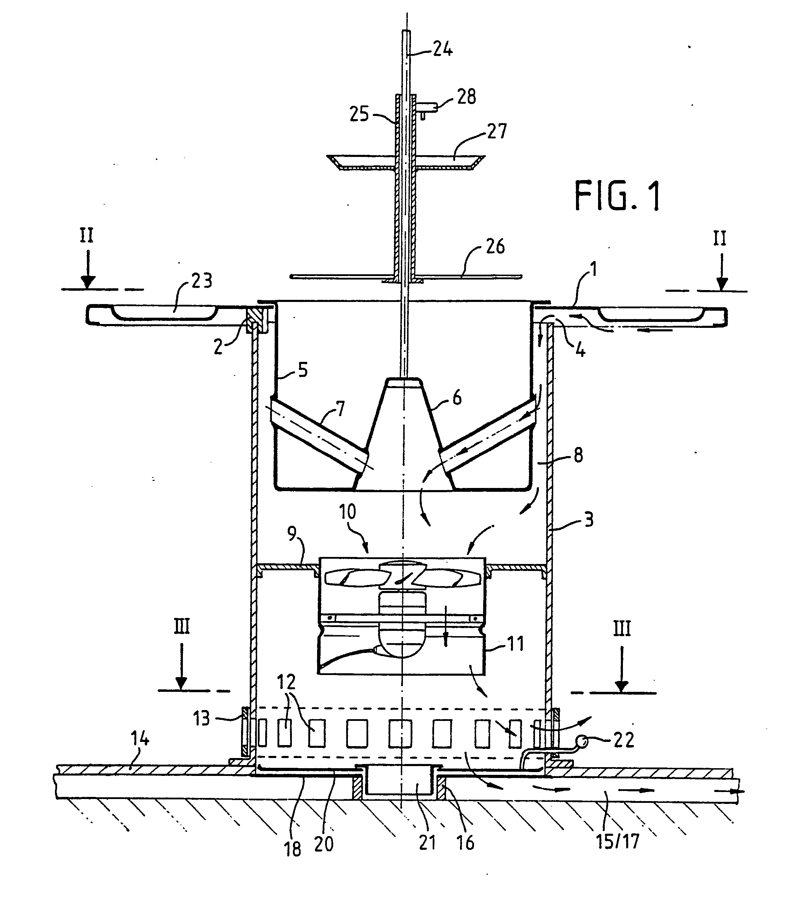

Nach dieser kurzen Anwärmphase wird die Drehrichtung des Ventilators 10 gewechselt. Die Luftströmung verläuft nunmehr nach den in Fig. 1 eingezeichneten Pfeilen. Die kalte Luft wird unter der Tischplatte 1 angesaugt und kühlt dadurch diese Platte. Nach Passieren der Lufteintrittsöffnungen 4 erwärmt sich die Luft im Spalt 8 und in den Luftheizrohren 7 und strömt weiter nach unten, wo sie je nach Einstellung des Griffstücks 22 entweder durch die Luftauslaßöffnungen 12 oder durch die Luftströmungskanäle 17 (Fig. 3) oder auf beiden Wegen, ggf. in unterschiedlichem Mengenverhältnis, austritt.

1 Tischplatte
2 Abstandshalter
3 Hohlfuß
4 Lufteintrittsöffnung
5 Feuerungsbehälter
6 Einformung
7 Luftheizrohr
8 Spalt
9 Zwischenring
10 Ventilator
11 Leitrohr
12 Luftauslaßöffnung
13 Drehring
14 Bodenbelag
15 Träger
16 Nabenring
17 Luftströmungskanal
18 Festplatte
19 Fenster
20 Drehplatte
21 Buchse
22 Griffstück
23 Vertiefung
24 Tragstab
25 Schiebehülse
26 Grillrost
27 Aufnahmeschale
28 Arretiervorrichtung

**Patentansprüche**

1. Grilltisch mit auf einem zentralen Hohlfuß (3) abgestützter Tischplatte (1), die eine zentrale Öffnung aufweist, in die ein Feuerungsbehälter (5) eingesetzt ist, oberhalb dessen sich der Grillrost (26) befindet, wobei zwischen der Tischplatte (1) und dem Hohlfuß (3) Lufteintrittsöffnungen (4) vorgesehen sind, die den Ringraum (8) zwischen Hohlfuß (3) und Feuerungsbehälter (5) mit dem Außenluftbereich unterhalb der Tischplatte verbinden, dadurch gekennzeichnet, daß der Feuerungsbehälter (5) nach unten und auf den Seiten, die den ringförmigen Spalt (8) mitbegrenzen, geschlossen ist, daß im Hohlfuß (3) ein Gebläse (10) angeordnet ist und daß sich im Bodenbereich des Hohlfußes (3) an diesen eine Luftauslaßeinrichtung (12, 13 ; 18, 20) anschließt.

2. Grilltisch nach Anspruch 1, dadurch gekennzeichnet, daß der Hohlfuß (3) in der Nähe seines unteren Randes einen Umfangslochkranz (12) aufweist, der von einem einen identischen Lochkranz aufweisenden Drehring (13) abgedeckt ist.

3. Grilltisch nach Anspruch 1, dadurch gekennzeichnet, daß unter dem den Hohlfuß (3) tragenden Boden (14) eine Anzahl radial zur Vertikalachse des Hohlfußes verlaufender, vom Innenraum des Hohlfußes (3) ausgehender Luftströmungskanäle (17) gebildet sind, die mittels eines Drehschiebers (18, 20) absperrbar sind.

4. Grilltisch nach Anspruch 2 und 3, dadurch gekennzeichnet, daß der Drehring (13) und der Drehschieber (20) durch ein gemeinsames Betätigungsorgan (22) derart miteinander gekuppelt sind, daß in der einen Endstellung des Betätigungsorgans die Löcher (12) des Lochkranzes geöffnet und die Luftströmungskanäle (17) gesperrt sind, während in der anderen Endstellung die Löcher (12) geschlossen und die Luftströmungskanäle (17) geöffnet sind.

5. Grilltisch nach Anspruch 1, dadurch gekennzeichnet, daß der Feuerungsbehälter (5) mit einer Anzahl strahlenförmig angeordneter Luftheizrohre (7) durchsetzt ist, die sich zwischen einer zentralen Einformung (6) des Behälterbodens und der Behälterseitenwand erstrecken.

6. Grilltisch nach Anspruch 1, dadurch gekennzeichnet, daß die Drehrichtung des Gebläserotors umkehrbar ist.

**Claims**

1. Grill table with a table board (1) supported on a central hollow base (3) and having a central orifice, into which is inserted a firebox (5), above which the grilling grid (26) is located, there being between the table board (1) and the hollow base (3) air inflow orifices (4) which put the annular space (8) between the hollow base (3) and the firebox (5) in communication with the region of outside air underneath the table board, characterized in that the firebox (5) is closed at the bottom and on the sides participating in delimiting the annular gap (8), in that a fan (10) is arranged in the hollow base (3), and in that an air outlet device (12, 13 ; 18, 20) adjoins the hollow base (3) in the bottom region of the latter.

2. Grill table according to Claim 1, characterized in that the hollow base (3) has, near its lower edge, a peripheral string of ports (12) which is covered by a rotary ring (13) having an identical string of ports.

3. Grill table according to Claim 1, characterized in that under the floor (14) carrying the hollow, base (3) is formed a number of air flow channels (17) which are radial relative to the vertical axis of the hollow base and extend from the interior of the hollow base (3) and which can be shut off by means of a rotary slide (18, 20).

4. Grill table according to Claims 2 and 3, characterized in that the rotary ring (13) and the rotary slide (20) are coupled to one another by means of a common actuating member (22), in such a way that, in one end position of the actuating member, the ports (12) of the string of ports are opened and the air flow channels (17) shut off, whereas, in the other end position, the ports (12) are closed and the air flow channels (17) opened.

5. Grill table according to Claim 1, characterized in that the firebox (5) has passing through it a number of air-heating tubes (7) which are arranged in a radiating formation and which extend between a central indented portion (6) of the firebox bottom and the firebox side wall.

6. Grill table according to Claim 1, characterized in that the direction of rotation of the fan rotor is reversible.

## Revendications

1. Table rôtissoire, comportant un plateau de table (1) supporté par un pied creux formant cylindre central (3) et présentant une ouverture centrale dans laquelle est inséré un récipient de chauffe (5), au-dessus duquel se trouve le gril (26), des orifices d'entrée d'air (4) étant prévus entre le plateau (1) de la table et le pied creux (3), orifices qui relient l'espace annulaire (8) entre le pied creux (3) et le récipient de chauffe (5) à la zone d'air extérieur située au-dessous du plateau de la table, table caractérisée en ce que le récipient de chauffe (5) est fermé vers le bas et sur les côtés qui délimitent l'intervalle annulaire (8), en ce qu'un ventilateur (10) est disposé dans le cylindre que forme le pied creux (3), et en ce que dans la zone de fond du pied creux (3) se raccorde à celle-ci un dispositif de sortie d'air (12, 13 ; 18, 20).

2. Table selon la revendication 1, caractérisée en ce que le pied cylindrique creux (3) est pourvu à proximité de son bord inférieur d'une couronne perforée périphérique (12), qui est recouverte par un anneau tournant (13) comportant une couronne perforée identique.

3. Table selon la revendication 1, caractérisée en ce que au-dessous du fond (14) portant le pied creux (3) sont formés un certain nombre de canaux (17) d'écoulement d'air partant de l'espace intérieur qu'entoure le pied creux (3) et s'étendant en direction radiale par rapport à l'axe vertical du pied creux, et qui sont obturables au moyen d'un coulisseau tournant (18, 20).

4. Table selon les revendications 2 et 3, caractérisée en ce que l'anneau tournant (13) et le coulisseau tournant (20) sont accouplés l'un avec l'autre au moyen d'un organe de manœuvre commun (22), de telle manière, que dans l'une des positions terminales de l'organe de manœuvre les trous (12) de la couronne perforée sont ouverts et les canaux (17) d'écoulement d'air sont obturés, tandis que dans l'autre position terminale les trous (12) sont fermés et les canaux (17) d'écoulement d'air sont ouverts.

5. Table selon la revendication 1, caractérisée en ce que le récipient de chauffe (5) est traversé par un certain nombre de tubes (7) de chauffage à air, disposés en forme de rayons, et qui s'étendent entre un évidement central (6) formé dans le fond du récipient et la paroi latérale du récipient.

6. Table rôtissoire selon la revendication 1, caractérisée en ce que le sens de rotation du rotor du ventilateur est inversable.

FIG. 1

0 183 082

FIG.2

FIG.3